# EUROPEAN PATENT APPLICATION

(11) **EP 2 720 517 A1**
(43) Date of publication of application: **16.04.2014**
(21) Application number: 12797104.2
(22) Date of filing: 22.05.2012
(51) Int. Cl.: H05B 39/04, F21V 23/00, F21Y 101/02

(54) **LIGHT DIMMING CONTROL DEVICE FOR LED ILLUMINATION**

(30) Priority: 04.06.2011 CN 201110150029
(71) Applicant: Wei, Qicui, Hangzhou, Zhejiang 310012 (CN)
(72) Inventor: LI, Zongbing, Zhejiang 310012 (CN); SONG, Xiao, Zhejiang 310012 (CN); WENG, Dafeng, Zhejiang 310012 (CN)
(74) Representative: Hoarton, Lloyd Douglas Charles
(86) International application number: PCT/CN2012/075899
(87) International publication number: WO 2012/167693

(57) **Abstract**

In order to keep the advantage of PWM dimming control device and make the LED driver high reliability and the LED lamp long lifetime, it is required that the frequency of PWM dimming control device is related with or the same as the output frequency of existed dimmers; and the output PWM dimming pulse is covered by the output pulse from dimmers further. The present invention discloses a novel "LED dimming control" device to make that the frequency of PWM dimming control device is related with or the same as the output frequency of dimmers; and the output PWM dimming pulse is covered by the output pulse from the dimmers further. In this way, it can guarantee that as PWM dimming pulse comes, the output from the dimmer can offer enough power to the LED driver and the LED driver can output the required LED driving current without flicker.

## Description

### TECHNICAL FIELD

The present invention relates to line AC frequency and phase control. More particularly, the invention relates to a new control device to LED dimming.

### BACKGROUND OF THE INVENTION

In order to take the advantage of LED general lighting in energy saves and brightness regulating requirement from customer, it is necessary to use dimming technology in LED general lighting application. In offline LED dimming application, there are two kinds of most popular dimmers in the market. One is forward-phase dimmer (Triac dimmer); the other is reverse-phase dimmer (Transistor dimmer). The dimmers are used to control the input AC power of the LED lamp. The output of the dimmer includes both the supply power to LED lamp from the AC line and the dimming phase information. For a dimmer, if it is forward-phase dimmer (Triac dimmer), it is leading edge dimming; if it is reverse-phase dimmer (Transistor dimmer), it is lagging edge dimming.

For AC line dimmers, there are two kinds of dimming control devices: the first one is an analog dimming method. It picks up the pulse width information from the output of the dimmer and pass through a low-pass filter to get the related DC voltage signal. The DC voltage signal is proportion with the pulse width information from the output of the dimmer. The DC voltage signal is used to control the output current from a LED driver and to implement analog dimming. The advantage of analog dimming is simple and no output noise; the disadvantage is that there is color shift as the LED driving current decreases. For forward-phase dimmer (Triac dimmer), there is minimum holding up current and it is related with the power level of the dimmer. The higher power is, the higher holding up current is in general. In analog dimming, as it is in deep dimming level, that is, low output LED driving current. It is possible to make the input current of the LED driver less than the required holding up current, and it makes the conducting angle of Triac dimmer unstable and the output waveform unstable. It is the output of the dimmer unstable that makes the output current of the LED driver with jitter and the output light from the driven LED with flicker. Another issue with analog dimming is there is confliction between response capability and modulation related with line frequency. The second one is PWM dimming method. It picks up the output pulse width information from the dimmer output and processes the information and generates the related PWM signal to control the output duty-cycle of the LED driving current from the LED driver in order to change the output power. The advantage of the control device is that the output is a PWM signal and it only controls LED turn-on time and doesn't impact LED driving current amplitude. With the control device, due to LED driving current constant, it has less color shift issue. So far there are some PWM dimming devices, e.g. National semiconductor's LM3445 proposal control device. It can output 400Hz PWM control signal to implement PWM dimming control device. In order to implement the control device, it requires that the input of LED driver has high enough input power or energy to output the related LED driving current. In general, to meet the requirement, it needs to add one or couple big electrolytic capacitors to store the energy to make sure that as PWM control signal comes, the input of the LED driver can offer the required power and the LED driver can output the related LED driving current. In integrated LED lamp application, due to space limitation, the LED driver needs to operate under higher environment temperature. In order to keep high reliability of the LED driver and long lifetime of LED lamp, it hopes that there is no big capacitor in the LED driver to impact on the lifetime of LED driver and LED lamp.

In order to keep the advantage of PWM dimming control device and make the LED driver high reliability and the LED lamp long lifetime, it is required that the frequency of PWM dimming control device is related with or the same as the output frequency of dimmer; and the output PWM dimming pulse is covered by the output pulse from the dimmer further. In this way, it can guarantee that as PWM dimming pulse comes, the output from the dimmer can offer enough power to the LED driver and the LED driver can output the required LED driving current.

### SUMMARY OF THE INVENTION

The present invention discloses a novel "LED dimming control" device to make that the frequency of PWM dimming control device is related with or the same as the output frequency of dimmer (for 50Hz or 60Hz AC line frequency, after the rectifier bridge, the frequency is 100Hz or 120Hz, so the frequency of PWM dimming control device is 100Hz or 120Hz).

In order to overcome above issues, the present invention proposes a LED dimming control device. It comprises: a synchronizing PWM signal extracting function block for extracting said signal from a dimmer, a PWM signal processing function block and a synchronizing PWM signal output function block for outputting a dimming signal for the dimmer. The synchronizing PWM signal extracting function block, the PWM signal processing function block and the synchronizing PWM signal output function block are connected to one another in turn; and the synchronizing PWM signal extracting function block is connected with the synchronizing PWM signal output function block;

The frequency of the input of the synchronizing PWM signal extracting function block is the same as that of the output of the synchronizing PWM signal output function block; the pulse width of the output of the synchronizing PWM signal output function block is covered by the pulse width of the input of the synchronizing PWM signal extracting function block.

As an improvement of the inventive LED dimming control device, the synchronizing PWM signal extracting function block comprises: an AC zero cross detecting block, a detecting block for detecting the pulse width signal of the output of the dimmer, an AC synchronizing block and a calculating block for calculating the phase of the pulse width signal of the output of the dimmer; wherein the calculating block for calculating the phase of the pulse width signal of the output of the dimmer is connected with the AC zero cross detecting block, the detecting block for detecting the pulse width signal of the output of the dimmer and the AC synchronizing block respectively. The AC zero cross detecting block is connected with the AC synchronizing block. The calculating block for calculating the phase of the pulse width signal of the output of the dimmer is connected with the PWM signal processing function block and the synchronizing PWM signal output function block;

The synchronizing PWM signal extracting function block detects AC zero through the AC zero cross detecting block. The AC zero is used as the starting point of the phase measurement. With the starting point, the AC synchronizing block generates a clock signal of multiples AC line frequency, and the detecting block for detecting the pulse width signal of the output of the dimmer detects the starting point or ending point of input pulse from the dimmer forward-phase dimmer (Triac dimmer) or reverse-phase dimmer (Transistor dimmer)). The calculating block for calculating the phase of the pulse width signal of the output of the dimmer calculates and outputs a related phase value based on the starting or ending point of the input pulse from forward-phase dimmer (Triac dimmer) or reverse-phase dimmer (Transistor dimmer). The related phase value is used as a sampled output value for pulse width from the dimmer in the current cycle. The synchronizing PWM signal extracting function block also outputs the clock signal of multiples AC line frequency and the correspondent phase starting or ending point of signal from forward-phase dimmer (Triac dimmer) or reverse-phase dimmer (Transistor dimmer).

As a further improvement of the inventive LED dimming control device, the PWM signal processing function block comprises: a first judgment module for judging a dimming action or a jitter on the dimming output pulse width, a second judgment module for judging the cancellation of the jitter on the dimming pulse width and a third judgment module for judging the cancellation of interference; they are connected to one another in turn; wherein the first judgment module for judging a dimming action or a jitter on the dimming output pulse width is connected with the third judgment module for judging the cancellation of interference, the first judgment module for judging a dimming action or a jitter on the dimming output pulse width is connected with the calculating block for calculating the phase of the pulse width signal of the output of the dimmer, and the first judgment module for judging a dimming action or a jitter on the dimming output pulse width is connected with the synchronizing PWM signal output function block;

The input signal of the PWM signal processing function block is one input of the first judgment module for judging a dimming action or a jitter on the dimming output pulse width. Based on the output pulse width phase value from the synchronizing PWM signal extracting function block, the PWM signal processing function block makes a determination if it is the action of dimming or dimming output pulse width jitter. If it is the action of dimming, after interference cancellation, a new output pulse width value of the dimmer is stored and used as a reference value for next cycle.

As a further improvement of the inventive LED dimming control device, the synchronizing PWM signal output function block comprises a pulse width signal generator for power factor control, a correcting circuit for correcting the pulse width signal from the PWM signal processing function block and a pulse width signal synthesizing and outputting circuit; wherein: the pulse width signal generator for power factor control and the correcting circuit for correcting the pulse width signal from the PWM signal processing function block are connected with the pulse width signal synthesizing and outputting circuit respectively; and the pulse width signal generator for power factor control is connected with the calculating block for calculating the phase of the pulse width signal of the output of the dimmer, and the correcting circuit for correcting the pulse width signal from the PWM signal processing function block is connected with the first judgment module for judging a dimming action or a jitter on the dimming output pulse width;

The output of the synchronizing PWM signal extracting function block is an input of the pulse width signal generator for power factor control. The output of the PWM signal processing function block is an input of the correcting circuit for correcting the pulse width signal. The synchronizing PWM signal output function block use AC zero as a reference point to generate the related signal with power factor control issue and to increase the power factor of the LED driver. In the same time, the synchronizing PWM signal output function block bases on the output phase value of the PWM signal processing function block to output a synchronized PWM dimming signal. Due to process in the PWM signal processing function block, it can be guaranteed that the output pulse from the synchronizing PWM signal output function block is covered by the output voltage waveform from the dimmer; and the output pulse is synthesized with the signal related of power factor control to output the final dimming pulse width.

As a further improvement of the inventive LED dimming control device, the synchronizing PWM signal extracting function block comprises: an AC zero cross detecting block, an input signal detecting block, a phase lock loop circuit and a dimming phase output block; wherein: the dimming phase output block is connected with the AC zero cross detecting block, the input signal detecting block, and the phase lock loop circuit respectively; the AC zero cross detecting block is connected with the phase lock loop circuit;

The PWM signal processing function block comprises: a phase memory module, a phase location judgment module and a delay module; they are connected to one another in turn; the delay module is connected with the phase memory module, and the dimming phase output block is connected with the phase memory module;

The synchronizing PWM signal output function block comprises: a pulse width signal generating circuit for generating a pulse width signal with a fixed 120 degree, a no jitter pulse width signal generating circuit and an output circuit for dimming the dimmer, wherein the pulse width signal generating circuit for generating a pulse width signal with a fixed 120 degree and the no jitter pulse width signal generating circuit are connected with the output circuit for dimming the dimmer respectively; the phase memory module is connected with the no jitter pulse width signal generating circuit; and the dimming phase output block is connected with the pulse width signal generating circuit for generating a pulse width signal with a fixed 120 degree.

The present invention of line frequency synchronized PWM method is focus on the existed popular dimmers. With the present invention, it can not only guarantee to regulate output power of LED without color shift but also save a big input capacitor.

The advantage of the present invention is to regulate LED driver's output with PWM control and keep the LED driving current amplitude constant. It is PWM dimming and there is no color shift in the light from LED lamp.

The advantage of the present invention is the instant LED driving current constant even at narrow output pulse from the dimmer. It is possible to make the input current of the LED driver over the holding up current of Triac dimmer and avoid the Triac dimmer misfire and flicker from LED lamp.

The advantage of the present invention is with power factor correction function but without extra circuit. It can down the total cost of the lighting system.

The advantage of the present invention is that the output pulse width from the control device is covered by the input dimmer's voltage pulse width and it is possible to save a big input capacitor and to reduce the cost and extend the lifetime of LED driver.

The advantage of the present invention is without low-pass filter and the dimming response can be fast.

### BRIEF DESCRIPTION OF THE DRAWINGS

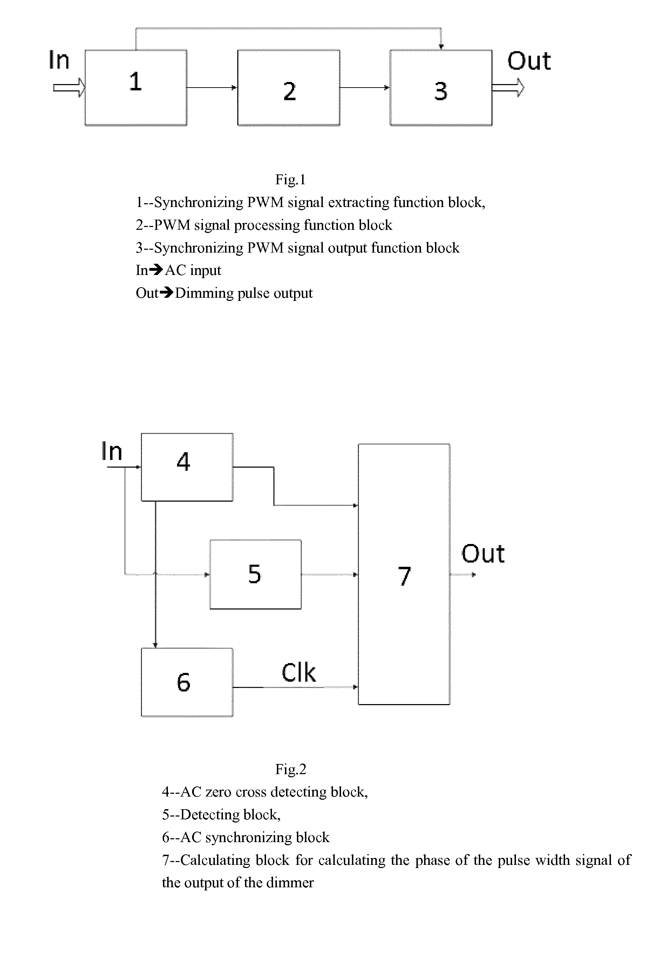

Fig.1 is a present invention LED dimming control device's function block diagram;
Fig.2 is a module block diagram of the present invention LED dimming control device's synchronized PWM signal extracting function block;

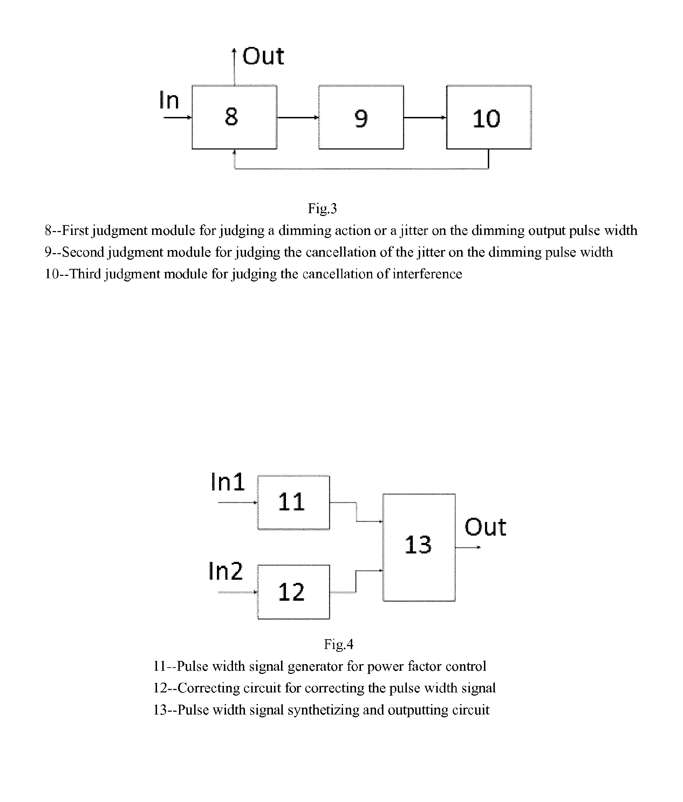

Fig.3 is a module block diagram of the present invention LED dimming control device's PWM signal processing function block;
Fig.4 is a module block diagram of the present invention LED dimming control device's synchronized PWM signal output function block;
Fig.5 is one of detailed embodiment of the "LED dimming control" device block diagram;
Fig.6 is another of detailed embodiment of the "LED dimming control" device block diagram;

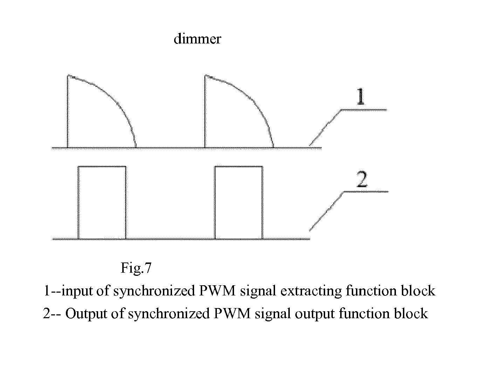

Fig.7 is time domain waveforms of the input of the synchronized PWM signal extracting function block and the output of the synchronized PWM signal output function block.

### DETAIL DESCRIPTION OF THE INVENTION

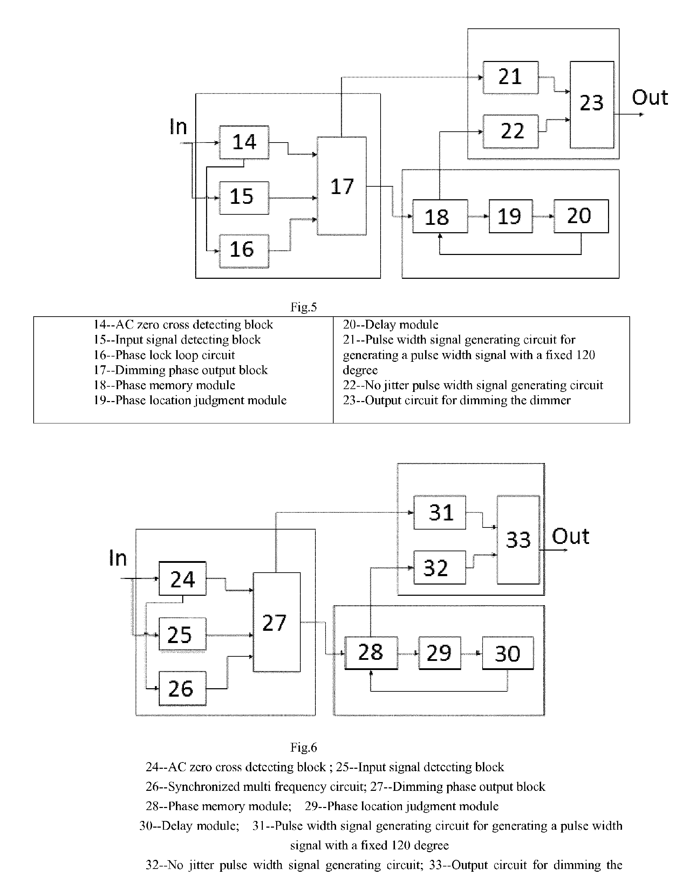

Figure 5 shows one detailed embodiment of invention device block diagram for LED Dimming Control Device. It is composed of a synchronizing PWM signal extracting function block (1), a PWM signal processing function block (2) and a synchronizing PWM signal output function block (3).

The synchronizing PWM signal extracting function block (1) is composed of an AC zero cross detecting block (14), an input signal detecting block (15), a phase lock loop circuit (16) and a dimming phase output block (17). The dimming phase output block (17) receives all outputs from the AC zero cross detecting block (14), the input signal detecting block (15) and the phase lock loop circuit (16) respectively. The output of the AC zero cross detecting block (14) is also as the input of the phase lock loop circuit (16).

The PWM signal processing function block (2) is composed of a phase memory module (18), a phase location judgment module (19) and a delay module (20). The phase memory module (18), the phase location judgment module (19) and the delay module (20) are in turn connected. The output of the delay module (20) is fed back to the phase memory module (18). The output of the dimming phase output block (17) is used as an input of the phase memory module (18).

The synchronizing PWM signal output function block (3) is composed of a pulse width signal generating circuit (21) for generating a pulse width signal with a fixed 120 degree, a no jitter pulse width signal generating circuit (22) and an output circuit (23) for dimming the dimmer. The pulse width signal generating circuit (21) for generating a pulse width signal with a fixed 120 degree and the no jitter pulse width signal generating circuit (22) are connected with the output circuit (23) for dimming the dimmer separately. The output of the PWM signal processing function block (2) is used as the input of the no jitter pulse width signal generating circuit (22). The output of the dimming phase output block (17) is used as the input of the pulse width signal generating circuit (21) for generating a pulse width signal with a fixed 120 degree.

The detailed operation is as following:
1. The AC zero cross detecting block (14) is composed of a comparator; the comparator is used to detect the zero cross point of AC line. The comparator's inputs are connected with a lower voltage (e.g. 150mV) and AC input voltage separately. The output of comparator is used as a signal for the phase counter's start point of the dimming phase output block (17) and the input synchronized signal of the phase lock loop (PLL) circuit (16). The phase lock loop (PLL) circuit (16) bases on the synchronized signal to generate a multi AC line frequency synchronized signal as the system operating clock.

The input signal detecting block (15) is used to detect the start or end point of dimming input and shape and process the signal waveform. In real application, there are two kinds of dimmers, that is, forward-phase dimmer (Triac dimmer) and reverse-phase dimmer (Transistor dimmer). For forward-phase dimmer (Triac dimmer), the sampled point is at the end point. For reverse-phase dimmer (Transistor dimmer), the sampled point is at the start point.

The AC zero cross detecting block (14) processes zero cross signal as a synchronized signal for the phase lock loop (PLL) circuit (16); The phase lock loop (PLL) circuit (16) generates multi AC line frequency synchronized signal as the system operating clock;

The AC zero cross detecting block (14), the input signal detecting block (15) and the phase lock loop (PLL) circuit (16) output processed signals into the dimming phase output block (17) and the dimming phase output block (17) takes care calculation and signal process. AC line input zero cross is taken as the starting point of a phase counter. The output clock from the phase lock loop (PLL) circuit (16) is used as the clock of the phase counter to count dimming input phase and get a digital data to represent input dimming phase information.
2. The dimming phase output block (17) will output the processed signal into the phase memory module (18) and the pulse width signal generating circuit (21) for generating a pulse width signal with a fixed 120 degree separately. The signal will process in two different paths as following:
   1) The phase memory module (18) accepts the input signal and stores it. The phase memory module (18) transmits the signal to the phase location judgment module (19). The phase location judgment module (19) is charged of judgment for jitter or dimming action. It can be done if the current cycle dimming input phase is around last cycle dimming input phase. Due to the function of the phase lock loop (PLL) circuit (16), the clock of the counter is 128 times AC line frequency. The judgment range can be in three clock cycles. Supposed the current line cycle input phase value is B and the previous phase value is A, it can make judgment that it is jitter if B is equal to A-1, A or A+1; otherwise, it is dimming. The phase location judgment module (19) will output the judgment signal to the delay module (20). The delay module (20) is used to judge if the output from the phase location judgment module (19) is a disturbing signal. It can be done by collecting 240 line cycle's output from the phase location judgment module (19). If 240 cycle's input phase values B aren't equal to A-1, or A or A+1 continuously, it is dimming action and the phase memory module (18) will refresh the original stored A value with new input phase value B; otherwise, it is jitter and the phase memory module (18) will keep original stored A value.
      The phase memory module (18) accepts the feedback signal from the delay module (20) and transmits it into the no jitter pulse width signal generating circuit (22). The no jitter pulse width signal generating circuit (22) will generate a pulse width signal to the output circuit (23) for dimming the dimmer.
   2) The pulse width signal generating circuit (21) for generating a pulse width signal with a fixed 120 degree is charged of accepting zero cross signal and clock signal process. It will generate a fixed starting point at 30°and a fixed ending point at 150° pulse width signal. The pulse width signal transmits to the output circuit (23) for dimming the dimmer.
   3) The output circuit (23) for dimming the dimmer bases on two inputs from the pulse width signal generating circuit (21) for generating a pulse width signal with a fixed 120 degree and the no jitter pulse width signal generating circuit (22) to generate no jitter dimming pulse width signal finally.

Figure 6 shows another detailed embodiment of invention device block diagram for LED Dimming Control Device. Compared with Fig.5, except the phase lock loop (PLL) circuit (16) is replaced with a synchronized multi frequency circuit (26), all other function blocks are the same. The synchronized multi frequency circuit (26) is used to count AC line cycle with a high frequency clock and to generate a synchronized fixed multi AC line frequency clock based on the counted AC line cycle value and AC zero cross point. It is to generate a synchronized multi AC line frequency clock for the phase counter to count dimming input phase and get a digital data to represent the input dimming phase information.

The detailed implementation of Fig.5 and 6 are combination of digital circuits and analog circuits. It has several advantages over existed solutions. It is simple in circuit and strong in anti-jitter function. It is easy to add additional function block to implement power factor control and decrease the total system cost. It is easy to modify the control parameters through adjustment of clock cycle number. It is easy to modify the range of phase location to increase the capability of the anti-jitter function. It is easy to modify the delay time to increase the anti-jitter capability.

Finally, it is also important to note that only a number of specific embodiments of the present invention are illustrated above. Apparently, the present invention is not limited to the above embodiments and it can also have a lot of modification and replacement, which is easily realized to persons of ordinary skill in this field from the above disclosure of the invention without departure from the spirit and scope of the present invention as described in the claims.

## Claims

1. A LED dimming control device, comprising: a synchronizing PWM signal extracting function block (1) for extracting said signal from a dimmer, a PWM signal processing function block (2) and a synchronizing PWM signal output function block (3) for outputting a dimming signal for the dimmer; wherein:
the synchronizing PWM signal extracting function block (1), the PWM signal processing function block (2) and the synchronizing PWM signal output function block (3) are connected to one another in turn; and the synchronizing PWM signal extracting function block (1) is connected with the synchronizing PWM signal output function block (3);
the frequency of the input of the synchronizing PWM signal extracting function block (1) is the same as that of the output of the synchronizing PWM signal output function block (3) ;
the pulse width of the output of the synchronizing PWM signal output function block (3) is covered by the pulse width of the input of the synchronizing PWM signal extracting function block (1).

2. The LED dimming control device of claim 1, wherein the synchronizing PWM signal extracting function block (1) comprises: an AC zero cross detecting block (4), a detecting block (5) for detecting the pulse width signal of the output of the dimmer, an AC synchronizing block (6) and a calculating block (7) for calculating the phase of the pulse width signal of the output of the dimmer; wherein the calculating block (7) for calculating the phase of the pulse width signal of the output of the dimmer is connected with the AC zero cross detecting block (4), the detecting block (5) for detecting the pulse width signal of the output of the dimmer and the AC synchronizing block (6) respectively; and the AC zero cross detecting block (4) is connected with the AC synchronizing block (6); and the calculating block (7) for calculating the phase of the pulse width signal of the output of the dimmer is connected with the PWM signal processing function block (2) and the synchronizing PWM signal output function block (3).

3. The LED dimming control device of claim 2, wherein the PWM signal processing function block (2) comprises:
a first judgment module (8) for judging a dimming action or a jitter on the dimming output pulse width, a second judgment module (9) for judging the cancellation of the jitter on the dimming pulse width and a third judgment module (10) for judging the cancellation of interference; wherein the first judgment module (8) for judging a dimming action or a jitter on the dimming output pulse width is connected with the third judgment module (10) for judging the cancellation of interference, the first judgment module (8) for judging a dimming action or a jitter on the dimming output pulse width is connected with the calculating block (7) for calculating the phase of the pulse width signal of the output of the dimmer and the first judgment module (8) for judging a dimming action or a jitter on the dimming output pulse width is connected with the synchronizing PWM signal output function block (3).

4. The LED dimming control device of claim 3, wherein the synchronizing PWM signal output function block (3) comprises a pulse width signal generator (11) for power factor control, an correcting circuit (12) for correcting the pulse width signal from the PWM signal processing function block (2) and a pulse width signal synthetizing and outputting circuit (13); wherein: the pulse width signal generator (11) and the correcting circuit (12) for correcting the pulse width signal from the PWM signal processing function block (2) are connected with the pulse width signal synthetizing and outputting circuit (13) respectively; and the pulse width signal generator (11) for power factor control is connected with the calculating block (7) for calculating the phase of the pulse width signal of the output of the dimmer, and the correcting circuit (12) for correcting the pulse width signal from the PWM signal processing function block (2) is connected with the first judgment module (8) for judging a dimming action or a jitter on the dimming output pulse width.

5. The LED dimming control device of claim 1, 2, 3 or 4, wherein the synchronizing PWM signal extracting function block (1) comprises: an AC zero cross detecting block (14), an input signal detecting block (15), a phase lock loop circuit (16) and a dimming phase output block (17); wherein:
the dimming phase output block (17) is connected with the AC zero cross detecting block (14), the input signal detecting block (15), and the phase lock loop circuit (16) respectively; the AC zero cross detecting block (14) is connected with the phase lock loop circuit (16);
the PWM signal processing function block (2) comprises: a phase memory module (18), a phase location judgment module (19) and a delay module (20); the phase memory module (18), the phase location judgment module (19) and the delay module (20) are in turn connected; the delay module (20) is connected with the phase memory module (18), and the phase output block (17) is connected with the phase memory module (18); and
the synchronizing PWM signal output function block (3) comprises: a pulse width signal generating circuit (21) for generating a pulse width signal with a fixed 120 degree, a no jitter pulse width signal generating circuit (22) and an output circuit (23) for dimming the dimmer, wherein the pulse width signal generating circuit (21) for generating a pulse width signal with a fixed 120 degree and the no jitter pulse width signal generating circuit (22) are connected with the output circuit (23) respectively; the phase memory module (18) is connected with the no jitter pulse width signal generating circuit (22); and the phase output block (17) is connected with the pulse width signal generating circuit (21) for generating a pulse width signal with a fixed 120 degree.
